**Europäisches Patentamt**

**European Patent Office**

**Office européen des brevets**

(19)

(11) Veröffentlichungsnummer: **0 145 879**
**B1**

(12) # EUROPÄISCHE PATENTSCHRIFT

(45) Veröffentlichungstag der Patentschrift:
04.01.89

(51) Int. Cl.⁴: **A 01 N 25/04**, B 01 F 3/12

(21) Anmeldenummer: **84112202.1**

(22) Anmeldetag: **11.10.84**

(54) **Verfahren zur Herstellung von Pflanzenschutzmittel-Dispersionen.**

(30) Priorität: **19.10.83 DE 3337964**

(43) Veröffentlichungstag der Anmeldung:
**26.06.85 Patentblatt 85/26**

(45) Bekanntmachung des Hinweises auf die Patenterteilung:
**04.01.89 Patentblatt 89/1**

(84) Benannte Vertragsstaaten:
**AT BE CH DE FR GB IT LI NL SE**

(56) Entgegenhaltungen:
**DE-B-1 020 034**
**FR-A-2 332 053**

**Die Akte enthält technische Angaben, die nach
dem Eingang der Anmeldung eingereicht wurden
und die nicht in dieser Patentschrift enthalten sind.**

(73) Patentinhaber: **HOECHST AKTIENGESELLSCHAFT,
Postfach 80 03 20, D-6230 Frankfurt am Main 80
(DE)**

(72) Erfinder: **Frensch, Heinz, Dr., Oestricher Weg 33,
D-6000 Frankfurt am Main 71 (DE)**
Erfinder: **Albrecht, Konrad, Dr., Sodener Strasse
64, D-6233 Kelkheim (Taunus) (DE)**
Erfinder: **Frisch, Gerhard, Dr., Westerwaldstrasse
7, D-6393 Wehrheim (DE)**

EP 0 145 879 B1

# EP 0 145 879 B1

**Beschreibung**

Pflanzenschutzmittel-Dispersionen können als wäßrige Systeme oder in selteneren Fällen auch als Öl-Dispersionen vorliegen. Es ist bekannt, Pflanzenschutzmittel-Dispersionen durch Naßvermahlung herzustellen. Hierbei wird der Wirkstoff zunächst mit Hilfe von sogenannten Brechern vorzerkleinert und in Pulverform gebracht. Der pulverisierte Wirkstoff wird dann zusammen mit den jeweiligen Formulierungshilfsmitteln in Wasser oder einem organischen Lösungsmittel zu einer Vormischung angerührt. Diese Vormischung wird anschließend mit geeigneten Naßvermahlungsanlagen zu den gewünschten Dispersionen vermahlen.

Dieses Herstellungsverfahren hat jedoch den Nachteil, daß es sehr aufwendig bezüglich der Apparatetechnik und sehr energieintensiv ist. Es werden Kessel und Mühlen verschiedenster Art benötigt. Insbesondere die Feinstvermahlung, bei der eine mittlere Partikelgröße von ca. 2 μm oder weniger erreicht wird, stellt einen sehr energieintensiven Prozeß dar.

Aus der FR-A-2 332 053 ist ein Verfahren zur Herstellung von Pflanzenschutzmitteldispersionen bekannt, wobei der Wirkstoff in geschmolzener Form unter starkem Rühren in ein wäßriges Medium, das eine Temperatur unterhalb der Schmelztemperatur des Wirkstoffs besitzt, eingearbeitet wird.

Aus der DE-B-1 020 034 ist ein Verfahren zur Herstellung von Feststoffsuspensionen bekannt, wobei man den zu suspendierenden Stoff in geschmolzener Form mit Hilfe von Zerstäubungsdüsen in eine vorbeigeführte kältere Flüssigkeit einspritzt, in der er unter den Arbeitsbedingungen nur wenig löslich oder praktisch unlöslich ist.

Die nach den Verfahrn aus der FR-A-2 332 053 und DE-B-1 020 034 hergestellten Dispersionen enthalten in der Regel die Feststoffe in einer mittleren Teilchengröße, die bei den gesteigerten Anforderungen an die Feinverteilung und Stabilität von Pflanzenschutzmittel-Dispersionen zu wünschen übrig läßt. Es wurde nun gefunden, daß man durch Eindosieren des geschmolzenen Wirkstoffs in einen mittels einer Düse erzeugten turbulenten Strom einer Lösung der Forrmulierungshilfsmittel Dispersionen von Pflanzenschutzmitteln mit verhältnismäßig geringer mittlerer Teilchengröße auf einfache Weise herstellen kann.

Gegenstand der vorliegenden Erfindung ist daher ein Verfahren zur Herstellung von Pflanzenschutzmittel-Dispersionen, die einen oder mehrere Wirkstoffe mit einer Teilchengröße von 2 μm und weniger als 2 μm neben üblichen Formulierungshilfsmitteln enthalten, dadurch gekennzeichnet, daß man den Wirkstoff in geschmolzener Form in den Austrittsstrahl einer Düse, der die wäßrige oder organische Lösung der Formulierungshilfsmittel enthält, eindosiert, wobei die Temperaturdifferenz zwischen der Wirkstoffschmelze und der Lösung der Formulierungshilfsmittel mindestens 15°C betragen muß.

Prinzipiell sind alle Wirkstoffe geeignet, die sich beim Schmelzen nicht zersetzen. Hinsichtlich der Stabilität der erhaltenen Dispersionen sind jedoch Wirkstoffe mit einem Schmelzpunkt über 70°C besonders geeignet, da bei Wirkstoffen mit niedrigerem Schmelzpunkt mitunter Agglomerate entstehen können, wenn das Produkt erhöhten Lagertemperaturen, die über dem Schmelzpunkt des Wirkstoffs liegen, ausgesetzt ist.

Mit dem erfindungsgemäßen Verfahren lassen sich wäßrige Dispersionen und Öl-Dispersionen herstellen. Für letztere Dispersionen werden die Formulierungshilfsmittel nicht in Wasser sondern in hochsiedenden organischen Lösungsmitteln wie Weißölen (langkettige Paraffinöle), hochsiedenden aromatischen Lösungsmitteln wie Xylole, Methylnaphthaline oder die ®Solvesso-Typen der Firma ESSO oder in hochsiedenden aliphatischen oder aromatischen Estern gelöst. Der Siedepunkt dieser organischen Lösungsmittel sollte 150°C nicht unterschreiten. Bevorzugt werden jedoch nach dem erfindungsgemäßen Verfahren Pflanzenschutzmittel-Dispersionen auf wäßriger Basis hergestellt.

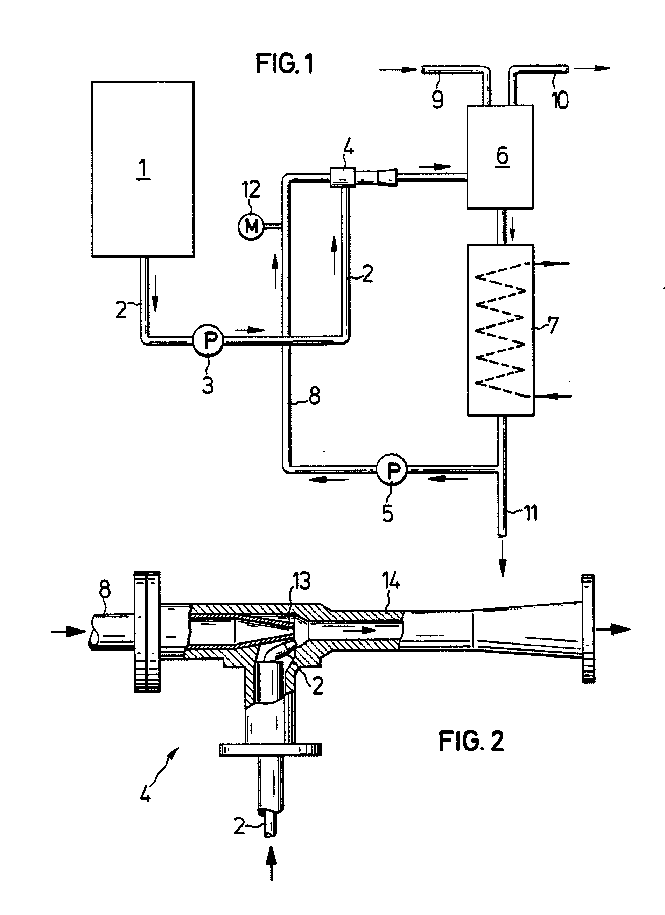

Die Temperaturdifferenz zwischen der Wirkstoffschmelze und der Lösung der Formulierungshilfsmittel sollte bevorzugt mehr als 40°C betragen. Die Obergrenze der Temperaturdifferenz wird durch den Schmelzpunkt der verwendeten Wirkstoffe bestimmt. Im allgemeinen werden Wirkstoffschmelzen eingesetzt, deren Temperatur nur wenig oberhalb der Schmelztemperatur des Wirkstoffes liegt, vorzugsweise 1 bis 10°C oberhalb der Schmelztemperatur. Die Temperatur der Lösnng der Formulierungshilfsstoffe sollte zweckmäßigerweise zweischen 10 und 50°C liegen. Vorteilhafterweise wird das erfindungsgemäße Verfahren gemäß Figur 1 durchgeführt, wobei die Lösung der Formulierungshilfsstoffe im Kreise geführt wird.

Gemäß Figur 1 wird der Wirkstoff im geschmolzenen Zustand in Behälter (1) vorgelegt. Von der Vorlage (1) wird die Wirkstoffschmelze mittels einer geeigneten beheizbaren Pumpe (3), beispielsweise einer Kolbenpumpe, Zahnradpumpe oder Kreiselpumpe über eine möglichst kurze, beheizte Leitung (2) zur Düse (4) transportiert. Diese Düse (4) befindet sich in einem Kreislauf, der sich aus einer Pumpe (5), einem Umlenkteil (6) und einem Intensivkühlsystem (7) zusammengesetzt. In diesem Kreislauf wird mittels Pumpe (5), beispielsweise einer Kreiselpumpe oder Druckkolbenpumpe, Wasser oder organisches Lösungsmittel, das die für die Pflanzenschutzmittelformulierungen benötigten Hilfsstoffe enthält, in der Leitung (8) umgepumpt. Über Leitung (9) werden die Hilfsstoffe in den Kreislauf eingeführt. Leitung (10) dient zur Entlüftung der Anlage. Über Leitung (11) wird die fertige Dispersion dem Kreislauf entnommen.

In diesen Kreislauf wird über die Düse (4) die Wirkstoffschmelze eindosiert. Mittels Pumpe (5) wird im Bereich zwischen Pumpe (5) bis Düse (4) ein Druck von größer 0,3 bar eingestellt; vorteilhaft sind Drucke zwischen 3 bar und 40 bar, besonders bevorzugt sind Drucke zwischen 4 und 35 bar. Die obere Druckgrenze wird durch die Auslegung der Anlage begrenzt. Bei einem Druck oberhalb 40 bar wird der apparative Aufwand zu groß. Die Druckhöhe wird durch entsprechende Wahl des Leitungsdurchmessers von Leitung (8) sowie durch die Wahl der Düse (4), als auch durch die Leistung der Pumpe (5), die regulierbar sein kann, eingestellt. Düse (4) und der Durchmesser der Leitung (8) werden vorteilhafterweise als konstantes Verhältnis ausgelegt.

2

Der Druck wird über das Manometer (12) kontrolliert.

Das die Düse (4) verlassende Gemisch wird in dem Umlenkteil (6) entspannt und dann über das Intensivkühlsystem (7) (Wärmeaustauscher) geleitet, um die Temperatur des Umlaufs in einem konstanten Bereich zu halten. Die geeignete Temperatur des im Kreislauf geführten Produkts variiert mit der Art des verwendeten Wirkstoffes; sie liegt vorteilhaft im Bereich zwischen 10 und 50°C.

Die zu verwendende Düse (4) wird schematisch in Figur 2 dargestellt, wobei alle handelsüblichen Düsen infrage kommen, die dem Schema von Figur 2 entsprechen. Die im Kreislauf geführte wäßrige Lösung tritt unter leichtem Druck in den linken Düsenteil ein und wird durch die Düsenverengung stärker beschleunigt. Hierbei kann das Verhältnis des Durchmessers des Einlaßrohrs (8) zum Durchmesser des Düsendurchgangs (13) (engste Stelle der Düse) im Bereich zwischen 2 : 1 und 100 : 1 variieren, insbesondere zwischen 3 : 1 und 30 : 1. Die hier und im nachfolgenden Text gemachten Angaben zu den Durchmessern der Vorrichtungen gemäß Figur 1 und 2 beziehen sich alle auf Innendurchmesser. Der Durchmesser des Einlaßrohrs (8) des im Kreislauf geführten Produkts ist abhängig von der Durchflußmenge des Umlaufs. Die Durchflußmenge des Umlaufs wiederum steht in einen bestimmten Verhältnis zur Zudosiermenge des Wirkstoffs und beträgt 1 : 1 bis 500 : 1, vorzugsweise 1 : 1 bis 100 : 1, besonders bevorzugt zwischen 5 : 1 und 50 : 1.

Unterhalb der Düsenverengung wird der Wirkstoff als Schmelze über das beheizte Einlaßrohr (2) direkt in den stark turbulenten Austrittsstrahl gepumpt. Der Durchmesser des Ausgangs des Einlaßrohrs (8), der Düsendurchgang (13), kann zwischen 2 bis 30 mm, vorteilhafterweise 4 bis 10 mm, je nach Auslegung der Anlage, betragen. Im Austrittsstück, Düsenausgang (14), der Gesamtdüse wird die Schmelze aufgrund der hohen auftretenden Turbulenzen bzw. Scherkräfte sofort mikronisiert und abgeschreckt, wobei dann Partikel von vorzugsweise 0,2 bis 50 µ Durchmesser erhalten werden. Die Größe der Partikel läßt sich insbesondere über den Druck, der im Kreislauf herrscht, regulieren. Je höher man den Druck wählt, desto feiner können die erhaltenen Partikel werden.

Die Vorlage (1) von Figur (1) stellt ein beliebiges Vorratsgefäß dar, das die gewünschte Menge an Wirkstoff enthält. Bei manchen Wirkstoffen kann es von Vorteil sein, das Vorratsgefäß mit Inertgas, beispielsweise Stickstoff unter einem Druck zwischen 0,1 und 10 bar zu überlagern, um den Wirkstoff noch besser in den Kreislauf eindosieren zu können. Prinzipiell ist es möglich, den Wirkstoff ohne Pumpe (3), nur mit Hilfe dieses Inertgasdruckes zuzudosieren. Die Zudosiergeschwindigkeit ist variabel und hängt von der Größe der Anlage ab.

Das hier als diskontinuierlich beschriebene erfindungsgemäße Verfahren kann auch kontinuierlich durchgeführt werden, indem man in bekannter Weise den aus dem Kreislauf ausgefahrenen Produktanteil sofort durch entsprechendes Nachdosieren der Ausgangsstoffe ersetzt. Dies läßt sich über bekannte technische Mess- und Kontrollverfahren regulieren.

Ebenso ist es möglich, nach dem erfindungsgemäßen Verfahren eine Dispersion mit mehreren zu dispergierenden Wirkstoffen herzustellen, indem man die gesigneten Wirkstoffe als Gemisch vorlegt, dieses in eine Schmelze überführt und in die Anlage eindosiert, oder indem man mehrere Vorratsgefäße mit der Düse (4) oder mehreren Düsen parallel schaltet.

Das erfindungsgemäße Verfahren ist hinsichtlich der Art der Wirkstoffe nicht auf bestimmte Typen begrenzt. So können alle bekannten Pflanzenschutzmittelwirkstoffe wie beispielsweise Fungizide, Herbizide, Insektizide, Akarizide, die insbesondere, wie oben ausgeführt, einen Schmelzpunkt von oberhalb 70°C aufweisen sollen, eingesetzt werden. Dies gilt auch für andere Stoffe, die nicht pestizid wirksam sind, sich jedoch zu Dispersionen verarbeiten lassen können.

Als Wirkstoffe kommen insbesondere infrage Schwefel, Linuron, Endosulfan, Binapacryl, Monolinuron, Chlortoluron, Isoproturon und Diuron.

Ebenso können die üblichen für Dispersionen geeigneten Hilfsstoffe wie die üblichen Netz- und Dispergiermittel, Emulgatoren, Verdicker, Entschäumer verwendet werden.

S. z. B. Broschüre 9151/82 Tenside für Pestizide von Sandoz; Broschüre Soprosoie (1981/82) von Rhône Poulenc, Broschüre Dehydag, Grundstoffe für die chemisch technische Industrie, Ausgabe 2 (1982) von Henkel, Broschüre Atlas-Tenside EC-G34-80 von Atlas Chemie.

Die Erfindung wird durch nachfolgende Beispiele näher erläutert.

**Beispiele 1 bis 6**

Es wurde die in Figur I dargestellte Apparatur unter Verwendung der Düse gemäß Figur 2 benutzt. Das Düseneinlaßrohr (8) der wäßrigen Lösung besaß einen Durchmesser von 14 mm, das Einlaßrohr der Wirkstoffschmelze (2) einen Durchmesser von 4 mm. Der Düsendurchgang (13) wies einen Durchmesser von 4,5 mm auf, der Düsenausgang (14) einen Durchmesser von 10 mm. Das Verhältnis Durchflußmenge im Umlauf zur Eindosiermenge der Wirkstoffschmelze wurde durch die unten angegebene Zudosiergeschwindigkeit der Wirkstoffschmelze bei entsprechendem eingestellten (unten angegebenen) Druck im Umlauf einreguliert. Die Temperatur dem Umlaufs variierte zwischen 20 und 50°C. Die Temperatur der Wirkstoffschmelze wird in den Beispielen angegeben.

**Beispiel 1**

| Wirkstoff: | 3,5 kg | Endosulfan (techn.) mit einer Temperatur von 95°C |
|---|---|---|
| Hilfsstoffe: | 0,7 kg | bestehend aus Sulfobernsteinsäurehalbester-Nasalz (0,4 kg), Alumosilikat (RDarvan Nr. 3) 0,05 kg, Ethylenglykol (0,2 kg) und Silikonentschäumer SE2 (0,05 kg) |

Wasser: 5,8 kg
Druck im Umlauf: 4 bar
Zudosiergeschwindigkeit des Wirkstoffs: 7,2 kg/h.

Es wurde eine stabile Dispersion mit einer mittleren Partikelgröße von 1,5 μ erhalten.

**Beispiel 2**

Es wurde dieselbe Zusammensetzung und Temperatur wie in Beispiel 1 gewählt. Bei einen Druck im Umlauf von 10 bar und einer Zudosiergeschwindigkeit von 9 kg/h wurde eine stabile Dispersion mit einer Partikelgröße von 1,2 μ erhalten.

**Beispiel 3**

| Wirkstoff: | 4,0 kg | Linuron (techn.) mit einer Temperatur von 90°C |
|---|---|---|
| Hilfsstoffe: | 0,6 kg | bestehend aus Ligninsulfonat, (0,45 kg) Alumosilikat (RDarvan Nr. 3) 0,1 kg und Silikonentschäumer (0,05 kg). |

Wasser: 5,4 kg
Druck im Umlauf: 7 bar
Zudosiergeschwindigkeit des Wirkstoffs: 12 kg/h.

Es wurde eine stabile Dispersion mit einer Partikelgröße von 1,6 μ erhalten.

**Beispiel 4**

| Wirkstoff: | 3,0 kg | Linuron (techn.), Temp. 90°C |
|---|---|---|
| Hilfsstoffe: | 0,75 kg | bestehend aus 0,1 kg (RDarvan Nr. 3), 0,4 kg Ligninsulfonat, 0,2 kg sulfobernsteinsäurehalbester-Na Salz und 0,05 kg Silikonentschäumer |

Wasser: 6,25 kg
Druck im Umlauf: 25 bar
Zudosiergeschwindigkeit des Wirkstoffs: 2 kg/h

Es wurde eine stabile Dispersion mit einer mittleren Partikelgröße von 1,1 μ erhalten.

**Beispiel 5**

| Wirkstoff: | 5 kg | Schwefel, Temperatur 120°C |
|---|---|---|
| Hilfsstoffe: | 0,5 kg | bestehend aus 0,25 kg Ligninsulfonat, 0,2 kg ethoxyliertem Nonylphenol mit 30E0 und 0,05 kg Alumosilikat (RDarvan Nr. 3) |

Wasser: 4,5 kg
Druck im Umlauf: 6 bar
Zudosiergeschwindigkeit: 5 kg/h

Es wurde eine stabile Dispersion mit einer mittleren Partikelgröße von 1,6 μ erhalten.

4

**Beispiel 6**

| | | |
|---|---|---|
| Wirkstoff: | 12,0 kg | Schwefel, Temperatur 120°C |
| Hilfsstoffe: | 2,7 kg | bestnhend aus 1,35 kg Ligninsulfonat, 0, 9 kg ethoxyliertem Monylphenol (mit 30E0), 3,3 kg Entschäumer und 0,15 kg RDarvan Nr. 3. |
| | | |
| Wasser: | 15,3 kg | |
| Druck im Umlauf: | 8 bar | |
| Zudosier-geschwindigkeit: | 6 kg/h | |

Es wurde eine stabile Dispersion mit einer mittleren Partikelgröße von 1,5 µ erhalten.

## Patentansprüche

1. Verfahren zur Herstellung von Pflanzenschutzmittel-Dispersionen, die einen oder mehrere Wirkstoffe mit einer mittleren Partikelgröße von 2 µm oder weniger als 2 µm neben üblichen Formulierungshilfsmitteln enthälten, dadurch gekennzeichnet, daß man den Wirkstoff in geschmolzener Form in den eine stark turbulente Strömung aufweisenden Austrittsstrahl einer Düse, der die wäßrige oder organische Lösung der Formulierungshilfsmittel enthalt, eindosiert, wobei die Temperaturdifferenz zwischen der Wirkstoffschmelze und der Lösung der Formulierungshilfsmittel mindestens 15°C betragen muß.

2. Verfahren gemäß Anspruch 1, dadurch gekennzeichnet, daß Wirkstoffe mit einem Schmelzpunkt oberhalb 70°C eingesetzt werden.

3. Verfahren gemäß Anspruch 1 oder 2, dadurch gekennzeichnet, daß die Temperaturdifferenz zwischen Wirkstoffschmelze und der Lösung der Formulierungshilfsmittel mehr als 40°C beträgt.

4. Verfahren gemäß einem oder mehreren der Ansprüche 1 bis 3, dadurch gekennzeichnet, daß die Lösung der Formulierungshilfsmittel eine Temperatur zwischen 10 bis 50°C besitzt.

5. Verfahren gemäß einem oder mehreren der Ansprüche 1 bis 4, dadurch gekennzeichnet, daß die Temperatur der Wirkstoffschmelze 1 bis 10°C über der Schmelztemperatur des Wirkstoffes liegt.

6. Verfahren gemäß einem oder mehreren der Ansprüche 1 bis 5, dadurch gekennzeichnet, daß die Lösung der Formulierungshilfsmittel im Kreis geführt wird.

7. Verfahren gemäß einem oder mehreren der Ansprüche 1 bis 6, dadurch gekennzeichnet, daß die Wirkstoffschmelze unter einem Druck von 0,1 bis 10 bar eindosiert wird.

8. Verfahren gemäß einem oder mehreren der Ansprüche 1 bis 7, dadurch gekennzeichnet, daß das Verhältnis des Durchmessers des Düseneinlaßrohres, durch das die Lösung der Formulierungshilfsmittel eingegeben wird, zum Durchmesser des Düsendurchgangs im Bereich zwischen 2 : 1 und 100 : 1 variiert.

9. Verfahren gemäß einem oder mehreren der Ansprüche 1 bis 8, dadurch gekennzeichnet, daß die Lösung der Formulierungshilfsmittel unter einem Druck zwischen 0,3 und 40 bar in die Düse eingepumpt wird.

10. Verfahren gemäß Anspruch 9, dadurch gekennzeichnet, daß die Lösung der Formulierungshilfsmittel unter einem Druck zwischen 3 und 40 bar, vorzugsweise zwischen 4 und 35 bar, in die Düse eingepumpt wird.

## Claims

1. A process for the preparation of dispersions of plant protection agents which contain one or more active ingredients having a mean particle size of 2 µm or less than 2 µm in addition to customary formulation aids, wherein the active ingredient is metered, in the molten form, into the outlet stream of a jet, which has strongly turbulent flow and contains an aqueous or organic solution of the formulation aids, it being necessary for the temperature difference between the active ingredient melt and the solution of formulation aids to be at least 15°C.

2. The process as claimed in claim 1, wherein active ingredients with a melting point above 70°C are used.

3. The process as claimed in claim 1 or 2, wherein the temperature difference between the active ingredient melt and the solution of formulation aids is more than 40°C.

4. The process as claimed in one or more of claims 1 to 3, wherein the temperature of the solution of formulation aids is between 10 and 50°C.

5. The process as claimed in one or more of claims 1 to 4, wherein the temperature of the active ingredient melt is 1 to 10°C above the melting point of the active ingredient.

6. The process as claimed in one or more of claims 1 to 5, wherein the solution of formulation aids is circulated.

7. The process as claimed in one or more of claims 1 to 6, wherein the active ingredient melt is metered in under a pressure of 0.1 to 10 bar.

8. The process as claimed in one or more of claims 1 to 7, where in the ratio of the diameter or the jet inlet tube through which the solution of formulation aids is introduced, to the diameter of the jet passage, varies in the range between 2 : 1 and 100 : 1.

9. The process as claimed in one or more of claims 1 to 8, wherein the solution of formulation aids is pumped into the jet under a pressure of between 0.3 and 40 bar.

10. The process as claimed in claim 9, wherein the solution of formulation aids is pumped into the jet under a pressure of between 3 and 40 bar, preferably of between 4 and 35 bar.

**Revendications**

1. Procédé pour la préparation de dispersions de produits phytosanitaires, qui contiennent une ou plusieurs matières actives ayant une granulométrie moyenne de 2 µm ou moins de 2 µm, outre des adjuvants de formulation habituels, caractérisé en ce qu'on introduit la matière active, à l'état fondu, dans le jet de sortie d'une buse, jet présentant un écoulement fortement turbulent, et contenant la solution aqueuse ou organique de l'adjuvant de formulation, la différence de température entre la matière active à l'état fondu et la solution des adjuvants de formulation devant être d'au moins 15°C.

2. Procédé selon la revendication 1, caractérisé en ce qu'on utilise des matières actives ayant un point de fusion supérieur à 70°C.

3. Procédé selon les revendications 1 ou 2, caractérisé en ce que la différence de température entre la matière active à l'état fondu et la solution des adjuvants de formulation est supérieure à 40°C.

4. Procédé selon l'une ou plusieurs des revendications 1 à 3, caractérisé en ce que la solution des adjuvants de formulation a une température comprise entre 10 et 50°C.

5. Procédé selon l'une ou plusieurs des revendications 1 à 4, caractérisé en ce que la température de la matière active à l'état fondu est de 1 à 10°C supérieure au point de fusion de la matière active.

6. Procédé selon l'une ou plusieurs des revendications 1 à 5, caractérisé en ce que la solution des adjuvants de formulation est envoyée en circuit fermé.

7. Procédé selon l'une ou plusieurs des revendications 1 à 6, caractérisé en ce que la matière active à l'état fondu est introduite sous une pression de 0,1 à 10 bar.

8. Procédé selon l'une ou plusieurs des revendications 1 à 7, caractérisé en ce que le rapport entre le diamètre du tube d'admission de la buse, par lequel est introduite la solution des adjuvants de formulation, et le diamètre du passage intérieur de la buse, est compris entre 2 : 2 et 100 : 1.

9. Procédé selon l'une ou plusieurs des revendications 1 à 8, caractérisé en ce que la solution des adjuvants de formulation est introduite dans la buse par pompage sous une pression de 0,3 à 40 bar.

10. Procédé selon la revendication 9, caractérisé en ce que la solution des adjuvants de formulation est introduite dans la buse par pompage sous une pression de 3 à 40 bar, de préférence de 4 à 35 bar.

FIG. 1

FIG. 2